**Europäisches Patentamt**

**European Patent Office**

**Office européen des brevets**

(11) Numéro de publication : **0 392 910 B1**

(12) **FASCICULE DE BREVET EUROPEEN**

(45) Date de publication du fascicule du brevet :
**27.07.94 Bulletin 94/30**

(51) Int. Cl.⁵ : **C22C 1/02,** F27D 23/04, B01F 5/02

(21) Numéro de dépôt : **90400958.6**

(22) Date de dépôt : **09.04.90**

(54) **Procédé et appareillage pour la préparation de l'eutectique lithium-plomb de formule lithium 17%-plomb 83%.**

(30) Priorité : **11.04.89 FR 8904748**

(43) Date de publication de la demande :
**17.10.90 Bulletin 90/42**

(45) Mention de la délivrance du brevet :
**27.07.94 Bulletin 94/30**

(84) Etats contractants désignés :
**DE GB IT**

(56) Documents cités :
**FR-A- 2 085 436**
**FR-A- 2 101 000**
**FR-A- 2 312 569**
**US-A- 1 360 269**
**US-A- 2 728 656**
**US-A- 2 854 333**

(56) Documents cités :
**MEMOIRES ET ETUDES SCIENTIFIQUES DE LA REVUE DE METALLURGIE, vol. 82, no. 12,décembre 1985, pages 643-656, Paris, FR; Ch. VIVES: "Transfert et brassage desmétaux fondus par de nouveaux procédés électromagnétiques"**

(73) Titulaire : **COMMISSARIAT A L'ENERGIE ATOMIQUE**
**31/33, rue de la Fédération**
**F-75015 Paris Cédex 15 (FR)**

(72) Inventeur : **Blanc, Raymond**
**724 Chemin de la Source**
**F-04100 Manosque (FR)**

(74) Mandataire : **Mongrédien, André et al**
**c/o BREVATOME**
**25, rue de Ponthieu**
**F-75008 Paris (FR)**

## Description

La présente invention se rapporte à la préparation de l'eutectique lithium-plomb de composition 17 atomes de lithium pour 83 atomes de plomb, qui est connu et susceptible d'utilisation très intéressante dans le domaine nucléaire.

En effet, cet eutectique, qui a son point de fusion à une température relativement basse égale à 235°C est utilisable dans les réacteurs à fusion contrôlée et ce pour deux raisons. D'une part sa basse température de fusion permet de l'utiliser facilement comme liquide de refroidissement à grande capacité calorifique et d'autre part, le fait qu'il contient du lithium le rend également très intéressant comme constituant du manteau fertile, puisque comme on le sait, le lithium se transforme en tritium selon les réaction (n, x):

$$n_0^1 + Li_3^6 \rightarrow He_2^4 + T_1^3$$
$$n_0^1 + Li_3^7 \rightarrow He_2^4 + T_1^3 + n_0^1$$

sous l'action des neutrons produits par la réaction de fusion. Or, le tritium est comme on le sait l'un des deux isotopes de l'hydrogène qui peut intervenir dans l'une des réactions de fusion les plus favorables.

Actuellement, l'eutectique Li-Pb (17%-83%) est obtenu par ajout du lithium dans le plomb, après avoir chauffé respectivement ces deux métaux jusqu'à leurs températures de fusion, et en les brassant au moyen d'agitateurs connus, comme par exemple un arbre muni d'ailettes et entraîné par un moteur.

Toutefois, un tel brassage n'est pas suffisamment efficace pour obtenir un bon rendement de l'eutectique Li(17%)-Pb(83%), car une partie de ces deux métaux est mélangée dans des proportions différentes de celles de l'eutectique 17%-83%.

La présente invention a précisément pour objet un procédé de préparation de l'eutectique de lithium-plomb $Li_{17}Pb_{83}$ qui, à l'aide de moyens particuliers faciles à mettre en oeuvre, permet d'affiner de façon considérable le mélange des deux métaux à l'état liquide et de parvenir à un contrôle rigoureux de la quantité de l'un et de l'autre de ces métaux associés au sein de l'eutectique.

Ce procédé de préparation de l'eutectique de lithium plomb de formule $Li_{17}Pb_{83}$ par mélange de ces deux métaux fondus à l'état liquide est caractérisé en ce qu'à une phase métallique liquide, composée initialement de plomb pur, et circulant selon un trajet en circuit fermé comportant deux zones de brassage distinctes successives $(Z_1, Z_2)$, on ajoute progressivement, au sein même de la première zone de brassage $(Z_1)$, des quantités faibles et contrôlées de lithium fondu, jusqu'à ce que l'ensemble de la masse métallique liquide fondue en circulation ait une composition correspondant exactement aux proportions de l'eutectique $Li_{17}Pb_{83}$, et en ce que la mise en circulation de la phase métallique liquide est réalisée par une pompe électromagnétique (13) immergée dans cette phase liquide dont l'entrée est munie d'un convergent en forme d'entonnoir (16) constituant la première zone de brassage $(Z_1)$ et dont le corps parcouru par la phase métallique liquide constitue la deuxième zone de brassage $(Z_2)$.

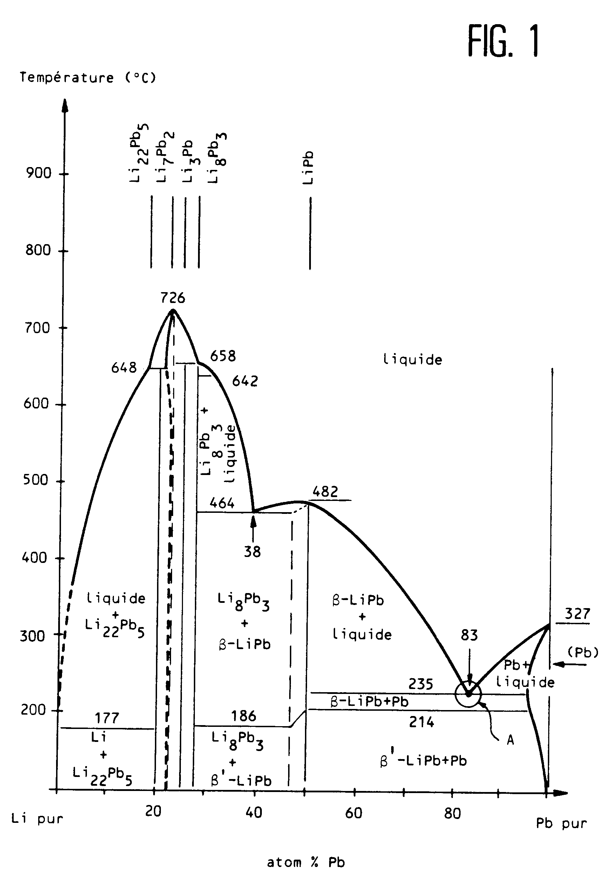

Le fait de partir d'une solution de plomb fondu pur auquel on ajoute progressivement des quantités faibles et dûment contrôlées de lithium, permet d'obtenir avec certitude le premier eutectique de formule $Li_{17}Pb_{83}$ que l'on rencontre sur la courbe d'équilibre lithium-plomb comme on pourra s'en convaincre en se reportant à la figure 1, montrant cette courbe.

Par ailleurs, le fait d'opérer sur une masse liquide en fusion circulant dans une cuve selon un trajet fermé le long duquel elle subit, à deux endroits différents, deux brassages successifs, améliore de façon considérable l'homogénéité du mélange des deux métaux réalisés.

En effet, il est bien connu que les pompes à métaux liquides réalisent déjà, par leur principe même de fonctionnement, un brassage énergique de la masse métallique liquide qu'elles véhiculent. Si de plus, on place à l'entrée d'une telle pompe un convergent en forme d'entonnoir qui provoque un vortex dans l'écoulement du métal liquide, on réalise ainsi une autre zone de brassage qui est en fait la première sur le parcours du liquide et dont l'effet s'ajoute à celui de la seconde située à l'intérieur de la pompe.

La présente invention a également pour objet un appareillage pour la mise en oeuvre du procédé de préparation de l'eutectique de lithium-blomb de formule $Li_{17}Pb_{83}$ qui permet, à l'aide d'un matériel simple et de mise en oeuvre facile, la fabrication de cet eutectique selon le procédé précédent.

Cet appareillage se caractérise essentiellement en ce qu'il comprend :
- un premier récipient de forme générale cylindrique allongée, destiné à contenir le lithium liquide et muni :
  a) de moyens de chauffage pour maintenir le lithium en fusion ;
  b) de moyens de repérage précis du niveau de lithium liquide dans le récipient ;
  c) à sa partie supérieure, d'une entrée d'alimentation en gaz neutre surmontant le volume libre au-dessus du lithium fondu ;
  d) à sa partie inférieure d'une conduite de sortie, munie d'une vanne, du lithium liquide vers un deuxième récipient ou cuve, ci-après explicité ;
- un deuxième récipient ou cuve destiné à contenir la masse métallique fondue en circulation fermée permanente, et comportant :
  e) une pompe électromagnétique immergée dans la masse métallique fondue et comportant une entrée en forme d'entonnoir et une sortie munie de tubulures de diffusion radiale dans la cuve du liquide véhiculé par la pompe pour le faire circuler selon une boucle fermée entre la base et le sommet de la cuve ;

f) des moyens de chauffage pour maintenir la masse métallique en fusion ;

g) une conduite de vidange, équipée d'une vanne, pour la vidange de l'eutectique formé.

Le premier récipient de forme générale cylindrique allongée est rempli de lithium et alimenté à son sommet en gaz neutre, ce qui permet selon la pression plus ou moins importante de régler l'écoulement du lithium liquide dans le second récipient ou cuve de circulation et de formation de l'eutectique proprement dit ; une résistance électrique ou canne chauffante immergée dans ce récipient permet de dégager les calories nécessaires au maintien en fusion du lithium liquide et un moyen quelconque connu permet de mesurer avec précision le niveau du lithium dans le cylindre et par conséquent le dosage très précis des quantités de ce dernier qui sont transférées par la conduite de sortie dans le deuxième récipient ou cuve destiné à contenir la masse métallique fondue en circulation fermée permanente.

A titre d'exemple, un tel moyen de repérage de niveau peut être constitué par l'un des dispositifs faisant l'objet des brevets français EN 70 36 216 et EN 73 35 706 appartenant au demandeur.

Selon l'invention, la cuve destinée à contenir la masse métallique fondue en circulation est équipée également d'une résistance électrique ou canne chauffante pour maintenir le métal en fusion et se situe sous le premier récipient cylindrique de façon à recevoir directement par gravité le lithium en provenance de sa conduite de sortie inférieure. Selon l'invention également une pompe électromagnétique occupe la partie centrale de cette cuve, l'entrée de la pompe étant munie d'un entonnoir en forme convergente dans lequel débouche directement la conduite de sortie inférieure du premier récipient contenant le lithium ; la conduite de sortie de la pompe électromagnétique est équipée de diffuseurs radiaux pour faire circuler la masse métallique liquide en circuit fermé le long de la cuve en remontant vers l'entrée en forme d'entonnoir de la pompe électromagnétique.

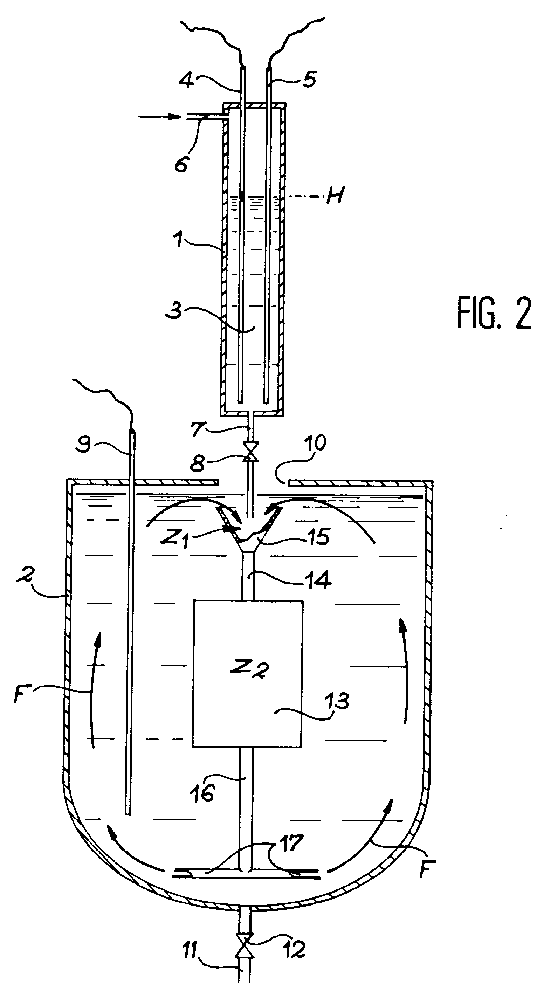

De toute façon, l'invention sera mieux comprise en se référant à la description qui suit du procédé de fabrication de l'eutectique lithium-plomb $Li_{17}-PB_{83}$, cette description étant faite surtout à titre indicatif et non limitatif en se référant aux figures 1 et 2 sur lesquelles :

- la fig. 1 représente les courbes d'équilibre connues lithium-plomb montrant les différents eutectiques existants ;
- la fig. 2 est un schéma de principe de l'appareillage objet de l'invention.

Sur la figure 1, on a représenté le diagramme connu des équilibres plomb-lithium, les abscisses montrant les compositions respectives à partir du lithium pur à gauche et du plomb pur à droite ; les ordonnées indiquent les températures en degrés centigrades. On a repéré par le cercle A, la composition très précise de l'eutectique $Li_{17}Pb_{83}$ sur la partie inférieure droite du diagramme et l'on constate comme indiqué précédemment que cet eutectique est le premier rencontré lorsque l'on part du plomb pur auquel on additionne progressivement des quantités de lithium faibles et contrôlées. Le diagramme montre que cet eutectique fond à 235°C. Ce diagramme justifie donc bien l'une des caractéristiques du procédé selon laquelle on additionne progressivement le lithium à une masse de plomb initiale pure fondue.

Sur la figure 2 on a représenté un schéma général et simplifié d'une installation d'un appareillage conforme à l'invention. Pour l'essentiel, cet appareillage comprend deux récipients superposés à savoir : un premier récipient de forme générale cylindrique allongée 1 surmontant une cuve 2 d'élaboration de l'eutectique proprement dite.

Le premier récipient 1 est rempli de lithium liquide 3 jusqu'à un niveau H contrôlé par un dispositif de mesure de niveau 4 qui peut être par exemple un tube amagnétique comportant une bobine inductrice, étant entendu que tout autre moyen connu peut également être utilisé. Le récipient 1 comporte également une canne chauffante 5 permettant de maintenir le lithium en fusion.

Ce récipient 1 est ouvert d'une part à son sommet où il comporte une canalisation 6 d'introduction de gaz neutre et d'autre part, à sa base, où il est équipé d'une conduite de sortie 7 munie d'une vanne 8 pour l'évacuation vers la cuve 2 du lithium fondu. Cette évacuation est réglée dans la pression du gaz neutre introduit par la partie supérieure du récipient 1 et les quantités de lithium déversées dans la cuve 2 sont estimées de façon précise à l'aide du mesureur de niveau 4.

La cuve 2 qui contient initialement le plomb liquide fondu est maintenue à la température nécessaire par la canne chauffante 9. Elle est munie d'une ouverture 10 à sa partie supérieure et d'une conduite de vidange de l'eutectique formé 11 comportant une vanne 12 à sa partie inférieure. Pour l'essentiel, la cuve 2 comporte en son centre une pompe électromagnétique 13 destinée à mettre en mouvement selon le circuit fermé indiqué par les flèches F, le métal liquide en fusion. Elle comporte à son entrée 14 une pièce 15 en forme d'entonnoir convergent qui crée un vortex constituant la première zone de brassage Z1 de l'installation. La conduite de sortie 7 du premier récipient cylindrique amène le lithium fondu directement au sommet de la pièce 15 en forme d'entonnoir permettant ainsi à la zone Z1 d'effectuer le premier brassage énergique du lithium et du plomb.

La deuxième zone de brassage Z2 est constituée par le corps de la pompe électromagnétique 13 ellemême, laquelle refoule le mélange des deux liquides fondus dans sa conduite de sortie 16 et dans les tubulures 17 de diffusion radiale dans la cuve 2 du mélange quittant celle-ci.

Au fur et à mesure que le mélange Li/Pb du récipient repasse dans la pompe 13 avec ajout continu et contrôlé de lithium, l'excès de plomb est de plus en plus faible jusqu'à l'obtention de l'eutectique Li 17%-Pb 83% pour la totalité du volume du récipient de mélange.

## Revendications

1. Procédé de préparation de l'eutectique de lithium plomb de formule $Li_{17}Pb_{83}$ par mélange de ces deux métaux fondus à l'état liquide, caractérisé en ce qu'à une phase métallique liquide, composée initialement de plomb pur, et circulant selon un trajet en circuit fermé comportant deux zones de brassage distinctes successives ($Z_1$, $Z_2$), on ajoute progressivement, au sein même de la première zone de brassage ($Z_1$), des quantités faibles et contrôlées de lithium fondu, jusqu'à ce que l'ensemble de la masse métallique liquide fondue en circulation ait une composition correspondant exactement aux proportions de l'eutectique $Li_{17}Pb_{83}$, et en ce que la mise en circulation de la phase métallique liquide est réalisée par une pompe électromagnétique (13) immergée dans cette phase liquide dont l'entrée est munie d'un convergent en forme d'entonnoir (16) constituant la première zone de brassage ($Z_1$) et dont le corps parcouru par la phase métallique liquide constitue la deuxième zone de brassage ($Z_2$).

2. Appareillage pour la mise en oeuvre du procédé de préparation de l'eutectique de lithium plomb de formule $Li_{17}Pb_{83}$ selon la revendications 1 précédente, caractérisé en ce qu'il comprend :
   - un premier récipient (1) de forme générale cylindrique allongée, destiné à contenir le lithium liquide et muni :
     a) de moyens de chauffage (5) pour maintenir le lithium en fusion ;
     b) de moyens (4) de repérage précis du niveau de lithium liquide dans le récipient ;
     c) à sa partie supérieure, d'une entrée (6) d'alimentation en gaz neutre surmontant le volume libre au-dessus du lithium fondu ;
     d) à sa partie inférieure d'une conduite de sortie (7), munie d'une vanne (8), du lithium liquide vers un deuxième récipient ou cuve (2), ci-après explicité ;
   - un deuxième récipient ou cuve (2) destinée à contenir la masse métaLlique fondue en circulation fermée permanente, et comportant :

e) une pompe électromagnétique (13) immergée dans la masse métallique fondue et comportant une entrée en forme d'entonnoir (15) située sous la conduite de sortie (7) et une sortie (16) munie de tubulures de diffusion radiale (17) dans la cuve du liquide véhiculé par la pompe (13) pour le faire circuler selon une boucle fermée entre la base et le sommet ;
f) des moyens de chauffage (9) pour maintenir la masse métallique en fusion ;
g) une conduite de vidange (11), équipée d'une vanne (12), pour la vidange de l'eutectique formé.

## Patentansprüche

1. Verfahren zur Herstellung des Eutektikums Lithium-Blei der Formel $Li_{17}Pb_{83}$ durch Mischen dieser zwei, geschmolzenen Metalle im flüssigen Zustand, **dadurch gekennzeichnet,** daß man zu dieser flüssigen Metallphase, die anfangs aus reinem Blei gebildet ist und entlang eines Weges mit geschlossenem Kreislauf zirkuliert, der zwei getrennte aufeinanderfolgende Umrührzonen ($Z_1$, $Z_2$) aufweist, mitten in die erste Umrührzone ($Z_1$) geringe und gesteuerte Mengen an geschmolzenem Lithium hinzufügt, bis die gesamte, geschmolzene, flüssige Metallmenge im Umlauf eine Zusammensetzung hat, die genau den eutektischen Anteilen $Li_{17}Pb_{83}$ entspricht,
   und daß der Umlauf der flüssigen Metallphase durch eine in diese flüssige Phase eingetauchte, elektromagnetische Pumpe (13) hergestellt wird, deren Einlaß mit einem trichterförmigen Rohrkopf (16) versehen ist, der die erste Umrührzone ($Z_1$) bildet, und deren von flüssiger Metallphase durchflossener Körper die zweite Umrührzone ($Z_1$) bildet.

2. Vorrichtung zur Durchführung eines Verfahrens zur Herstellung des Eutektikums Lithium-Blei der Formel $Li_{17}Pb_{83}$ gemäß dem vorhergehenden Anspruch 1, dadurch gekennzeichnet, daß sie umfaßt:
   - einen ersten Behälter (1) allgemein länglicher, zylindrischer Form, der bestimmt ist, das flüssige Lithium zu enthalten und versehen ist mit:
     a) Heizeinrichtungen (5), um das Lithium in Schmelze beizubehalten;
     b) Einrichtungen (4) zur genauen Erfassung des Pegels des flüssigen Lithiums in dem Behälter;
     c) einem Zufuhreinlaß (6) an seinem oberen Teil für neutrales Gas, das sich über dem freien Volumen des geschmolzenen Lithium erstreckt;

d) an seinem unteren Teil eine mit einem Ventil (8) versehene Auslaßleitung (7) für das flüssige Lithium zu einem zweiten Behälter oder Bottich (2), der nachstehend deutlich angegeben ist;

- ein zweiter Behälter oder Bottich (2), der bestimmt ist, die geschmolzene, sich in fortlaufendem, geschlossenem Kreislauf befindende Metallmasse zu enthalten, und umfaßt:

e) eine elektromagnetische Pumpe (13), die in die geschmolzene Metallmasse eingetaucht ist und einen trichterförmigen Einlaß (15), der sich unter der Auslaßleitung (7) befindet, und einen Auslaß (16) aufweist, der mit radialen Diffusorröhren (17) in dem Behälter der Flüssigkeit versehen ist, die von der Pumpe (13) transportiert wird, damit sie in einem geschlossenen Kreislauf zwischen dem unteren Teil und dem oberen Teil umläuft;

f) Heizeinrichtungen (9), um die Metallmasse in Schmelze zu halten;

g) eine mit einem Ventil (12) ausgerüstete Austragsleitung (11) zum Austragen des gebildeten Eutektikums.

## Claims

1. Process for the preparation of the lithium lead eutectic of formula $Li_{17}Pb_{83}$ by mixing these two molten metals in the liquid state, characterized in that to a liquid metal phase initially constituted by pure lead and flowing in closed circuit manner with two separate, successive agitating zones $(Z_1 Z_2)$, is progressively added within the first agitating zone $(Z_1)$, small, controlled molten lithium quantities until the molten liquid metal mass in circulation has a composition precisely corresponding to the $Li_{17}Pb_{83}$ eutectic proportions and in that the circulation of the liquid metal phase is brought about by an electromagnetic pump 13 immersed in said liquid phase and whose inlet is provided with a funnel-shaped convergent member (16) constituting the first agitating zone $(Z_1)$ and whose body traversed by the liquid metal phase constitutes the second agitating zone $(Z_2)$.

2. Apparatus for performing the lithium lead eutectic $Li_{17}Pb_{83}$ preparation process according to claim 1, characterized in that it comprises:

- a first generally elongated, cylindrical container (1) for containing the liquid lithium and provided with:

a) heating means (5) for keeping the lithium in the molten state,

b) means (4) for precisely marking the liquid lithium level in the container,

c) in its upper part, a neutral gas supply inlet (6) surmounting the free volume above the molten lithium,

d) in its lower part a discharge pipe (7) provided with a valve (8) for feeding the liquid lithium to a second container or tank (2), explained hereinafter,

- a second container or tank (2) for containing the permanently closed, circulating molten metal mass and having:

e) an electromagnetic pump (13) immersed in the molten metal mass and having a funnel-shaped inlet (15) positioned below the discharge pipe (7) and an outlet (16) provided with radial diffusion tubes (16) in the tank for the liquid carried by the pump (13) in order to circulate it in closed loop form between the bottom and top,

f) heating means (9) in order to maintain the metal mass in the molten state,

g) a drainage pipe (11) equipped with a valve (12) for draining off the eutectic formed.

# FIG. 1

FIG. 2